Europäisches Patentamt

European Patent Office

Office européen des brevets

(11) Publication number: **0 497 075 A2**

# EUROPEAN PATENT APPLICATION

(21) Application number: **91500124.2**

(22) Date of filing: **11.11.91**

(51) Int. Cl.5: **H04M 1/24**, H04M 3/24

(30) Priority: **31.01.91 ES 9100253**

(43) Date of publication of application:
**05.08.92 Bulletin 92/32**

(84) Designated Contracting States:
**AT BE CH DE DK FR GB GR IT LI LU NL SE**

(71) Applicant: **TELEFONICA DE ESPANA, S.A.**
**Gran Via 28**
**E-28013 Madrid(ES)**

(72) Inventor: **Aragoncillo Ballestrero, Antonio**
**Tel Investig. y Desarrollo, S.A., Emilio Vargas**
**6**
**E-28043 Madrid(ES)**

(74) Representative: **Carpintero Lopez, Francisco**
**HERRERO & ASOCIADOS, S.L. Alcalá, 21**
**E-28014 Madrid(ES)**

(54) **Modular public telephone maintenance unit.**

(57) Modular public telephone maintenance unit,
which unit comprises a microprocessor, a modular
telephone communication block, a dial switch for
making measurements and a loader for the modular
public telephone condensers, with a fast loader for
the modular public telephone feeder condensers to
load the logic and the actuators, such unit allowing
communication through any telephone located in a
line protected with a validation and identification unit,
the same being effected by selecting the identifica-
tion number with dial switches.

The unit also has circuit blocks to measure feed-
er condenser voltages, line current, ground related
alternate voltages and battery condition.

FIG.-1

## OBJECT OF THE INVENTION

The present invention relates to a modular public telephone maintenance unit specifically designed to allow communication with the said telephone's validation and identification unit (VIU) and, as appropriate, through the same with the switching central for quick identification of breakdowns, moreover allowing the feeder condenser to be loaded through a direct connection.

## FIELD OF THE INVENTION

This invention is applicable within the field of telecommunications, specifically as part of the infrastructure required for the new public telephone service, that allows the use of credit cards, to work properly.

## BACKGROUND OF THE INVENTION

Various systems and units are currently known that envisage the identification of breakdowns in equipment connected thereto and that are to be controlled.

However, none of the systems and units that are currently known have the maintenance and identification functions and characteristics, moreover having the communication needs altogether representing an object similar to the modular public telephone maintenance unit subject hereof.

This unit is specifically applicable within the modular public telephone management system, arising from the need for a quick loading of the feeder condensers in the actual modular public telephone, besides the measurement of a number of magnitudes through the validation and identification unit (VIU) in order to expedite a rapid identification of breakdowns, communication protocols to be effected with the validation and identification unit to start a call and to end the same.

## DESCRIPTION OF THE INVENTION

The modular public telephone maintenance unit subject hereof allows communication by using any telephone in a line protected with the validation and identification unit, the identification number being selected using dial switches.

The modular public telephone maintenance unit can measure the voltages of the feeder condensers (logic and actuators), as well as the line current voltage, the ground related alternate voltages, detecting and generating a diagnosis for the modular telephone's 12 kilohertz "Khz" pricing pulses, thereby to enable rapid identification of breakdowns and moreover allowing the modular public telephone condensers to be loaded quickly, by merely pressing a key.

Feeding of the modular public telephone maintenance unit is by a rechargeable battery of the telephone multitester, which, as is known, is a set that is currently used to test telephones, likewise being exchangeable therewith.

In order to use the lineman telephone in a protected line with the validation and identification unit, the unit is looped between the line and the telephone.

By pressing the "calls" button, the message is sent with the modular public telephone identification number to the validation and identification unit and, if correct, the validation and identification unit connects the modular public telephone line to the switching central.

A call can then be made with the conventional telephone.

Furthermore, the maintenance unit has a display for the measurements that can be made, which measurements are selected by means of a dial switch.

The following measurements can be made:
- Measurement of the feeder condenser voltages.
- Measurement of the line current.
- Measurement of the line's alternate voltages.

In order to measure the feeder condenser voltages, it is necessary for the condensers load cables to be connected to the telephone.

In order to measure the line current, a 1 ohm resistor, which is looped in the line, is used.

In order to measure the common mode alternate currents induced in the line, it is necessary to have a metallic point connected to the ground.

While the unit is active and connected to the telephone line, it constantly supervises the presence of 12 Khz computation impulses.

If the unit detects the said computation impulses, the latter indicates the same by means of a set of lets if the impulse is correct, or else frequency deviation in the line.

To end, the "END" key is pressed, timed opening being made and the message corresponding to the reply sent by the validation and identification unit is sent.

The line then switches to the rest position.

Quick loading of the modular public telephone feeder condensers begins on pressing the "load" button.

The unit also has a "TST BAT" key designed to check the condition of the battery, the voltage thereof appearing on the unit display.

The CALL, END, LOAD and TEST BAT buttons are labelled and suitably marked for identification purposes.

## DESCRIPTION OF THE DRAWINGS

In order to provide a fuller description and contribute to the complete understanding of the characteristics of this invention, two sheets of drawings are attached to the specification which, while purely illustrative and not fully comprehensive, show the following:

Figure number 1.- Is a front view of the modular public telephone maintenance unit subject hereof, showing the various buttons and lets making the same up, and connection thereof to the telephone line.

Figure number 2.- Is a block diagram of the maintenance unit shown in figure number 1.

## PREFERRED EMBODIMENT OF THE INVENTION

In light of these figures, it can be observed that the modular public telephone maintenance unit (1) subject of the invention is looped between the telephone line (4) and the modular telephone (3), same using a conventional telephone (2) to make the call once the relevant connection has been established.

The telephone (2) identification (5) is shown in the relevant unit area, by buttons.

While the equipment (1) is active and connected to the telephone line (4), the presence of twelve Khz computation impulses is supervised.

Lets (14) are used to indicate whether the impulse is correct, but if it has a frequency deviation in excess of 3%, it is marked in the lets numbered (15).

In the event of a deviation in excess of 10%, this would be reported by the indicator or let numbered (13).

The call button is numbered (6) while the CALL button is numbered (6), and the END button is numbered (8).

The WAIT let is numbered (7).

Quick loading of the feeder condensers begins by pressing the load button (11), the let (16) then being switched on, while loading takes place.

The modular public telephone maintenance unit has a display (9) designed to show the measurements that can be made, such measurements being selected by means of a dial switch (12).

In figure number 2, which shows a block diagram of the maintenance unit, the telephone is numbered (21), while the line connected is numbered (22) and the condensers (32).

The microprocessor (33) controls the modem (18) and the telephone connection, a filter having been numbered (17) and a 12 KHz rejecter circuit (20).

The modular telephone identification number is moreover taken as input (34).

The modem (18) is followed by a line connection circuit (19).

The switching system is represented by a feed source (27), an insulated voltage converter (26), an A/D converter (24), a switch (23) and the display (25).

This block diagram shown in figure number 2 also sets forth the battery charger numbered (28), the battery itself numbered (29), a 6/12 V converter (30) and the condensers loader (31).

The condensers are represented in the block numbered (32).

We feel that the device has now been sufficiently described for any expert in the art to have grasped the full scope of the invention and the advantages it offers.

The materials, shape, size and layout of the elements may be altered provided that this entails no modification of the essential features of the invention.

The terms used to describe the invention herein should be taken to have a broad rather than a restrictive meaning.

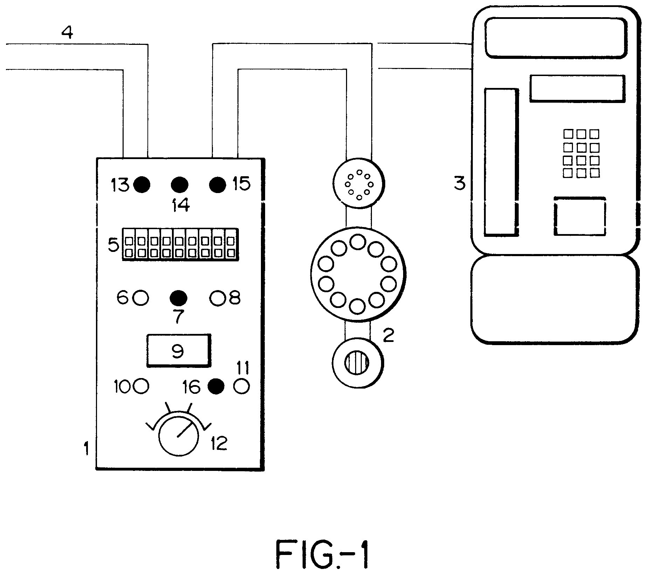

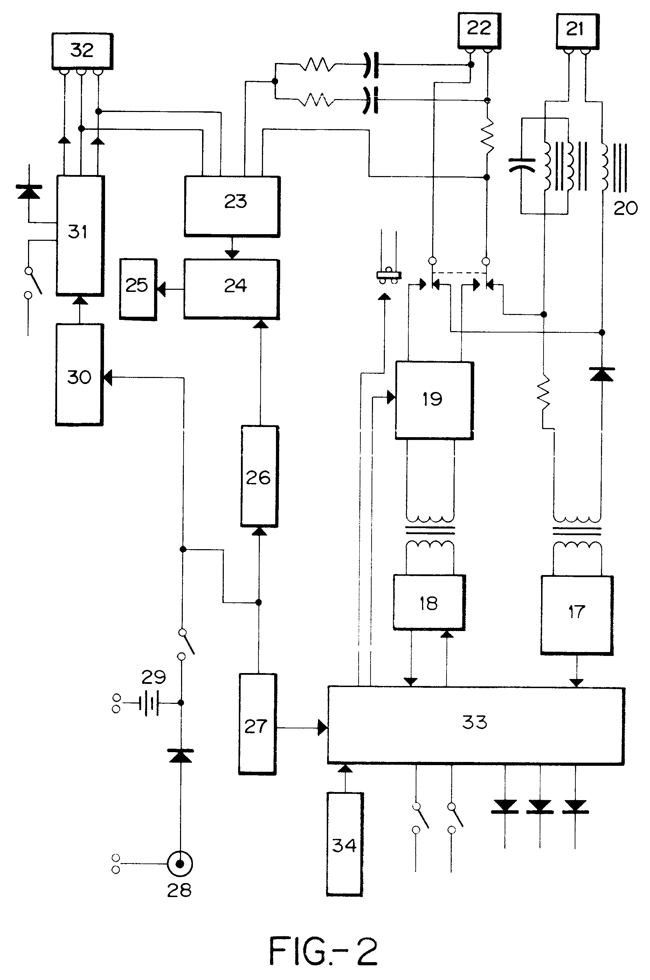

## Claims

1. Modular public telephone maintenance unit, comprising a microprocessor, a modular telephone communication block, a dial switch for making measurements and a modular telephone condensers loader, characterised in having a quick modular public telephones feeder condensers loader, loading of the logic and of the actuators taking place.

2. Modular public telephone maintenance unit, as in claim one, characterised in allowing communication through any telephone in the protected line with a modular public telephone validation and identification unit, the identification number being selected by means of dial switches.

3. Modular public telephone maintenance unit, as in previous claims, characterised in having the necessary circuit blocks to measure the voltages of the modular public telephone feeder condensers, measure the line current, measure the ground related alternate currents and test the condition of the unit battery, such measurements being made by pressing buttons.

4. Modular public telephone maintenance unit, as in previous claims, characterised in that the battery charger is compatible with the conventional telephone multitester.

FIG.-1

FIG.-2